# EUROPÄISCHE PATENTANMELDUNG

(11) **EP 4 825 168 A1**
(43) Veröffentlichungstag der Anmeldung: **21.10.2026**
(21) Anmeldenummer: 26166200.1
(22) Anmeldetag: 19.03.2026
(51) Int. Cl.: A01K 91/02, A01K 91/06, A01K 95/00

(54) **FISCHEREIZUBEHÖR**

(71) Anmelder: NR Partner Production GmbH, 8193 Eglisau (CH)
(72) Erfinder: Schuster, Norman, 8193 Eglisau (CH)
(74) Vertreter: E. Blum & Co. AG

(57) **Zusammenfassung**

Die Erfindung betrifft eine Vorrichtung (1) zum Fischen, umfassend ein Winkelprofil mit einem ersten Schenkel (2) und einem zweiten Schenkel (3) die über ein Verbindungselement verbunden und in einem Winkel (W1) zu einander angeordnet sind. Die Vorrichtung (1) umfasst weiter mindestens einen Aufnahmepunkt (2.1), für eine Schnur (10), der entlang einer ersten Höhe (H1) des ersten Schenkels (2) ausgestaltet ist. An dem Aufnahmepunkt (2.1) der Vorrichtung (1) kann die Schnur (10) einer Posenmontage (4) zum Fischen befestigt werden. Beim Fischen in einem Gewässer (7) mit Strömung verhindert die Vorrichtung (1) ein Abtreiben der Posenmontage (4).

## Beschreibung

### Gebiet

Die Erfindung betrifft eine Vorrichtung und deren Verwendung, zum Einsatz beim Fischen.

### Hintergrund

Fische, insbesondere Raubfische, halten sich in einem Gewässer mit einer Strömung bevorzugt in einem bestimmten Abstand relativ zum Ufer auf, wobei der Abstand je nach Fischart, Uhrzeit und weiteren Parametern variieren kann.

Um einen Fisch zu fangen muss ein Haken an einer Schnur also möglichst nah an dem Aufenthaltsort der Fische platziert und in dieser Position gegebenenfalls über einen längeren Zeitraum gehalten werden.

Dabei ergibt sich das Problem, dass die Strömung des Gewässers den Haken abtreibt.

Als Konsequenz muss eine Posenmontage periodisch neu an den gewünschten Ort ausgeworfen werden, was das Zeitfenster, in dem sich der Haken effektiv an der Position der Fische befindet und damit die Chance auf Erfolg, reduziert.

### Aufgabe und Lösung

Es stellt sich also die Aufgabe eine Vorrichtung bereitzustellen, die ein Abtreiben einer Posenmontage, umfassend eine Pose ein Gewicht und einen Haken zur Aufnahme eines Köders, die mittels einer Schnur verbunden sind, in einem Gewässer mit Strömung verhindert.

Diese Aufgabe wird durch eine Vorrichtung gemäss Anspruch 1 erfüllt. Gemäss Anspruch 1 umfasst die Vorrichtung ein Winkelprofil mit einem ersten Schenkel, einem zweiten Schenkel, einem Winkel zwischen dem ersten und dem zweiten Schenkel und mindestens einem Aufnahmepunkt für eine Schnur der Posenmontage am ersten Schenkel. Des Weiteren sind der erste Schenkel und der zweite Schenkel vorzugsweise quaderförmig mit einer konstanten Dicke und Höhe ausgestaltet, insbesondere können weitere Ausführungsformen jedoch asymmetrisch ausgeformte Schenkel aufweisen, die ein Volumen das von dem ersten Schenkel und dem zweiten Schenkel aufgespannt wird zumindest teilweise ausfüllen.

Durch den Winkel zwischen dem ersten Schenkel und dem zweiten Schenkel lenkt die Vorrichtung im Gewässer die Strömung so ab, dass eine Kraft senkrecht zur Strömung auf die Vorrichtung wirkt. Eine Stärke und eine Richtung der Kraft kann über eine Wahl des Aufnahmepunkts an der Vorrichtung und eine Orientierung der Vorrichtung in Bezug auf die Schnur angepasst werden. In Kombination mit einer Abtriebskraft durch die Strömung ergibt sich eine effektive Kraft, die auf die Posenmontage diagonal zur Strömung wirkt. Im Fall, dass die effektive Kraft parallel zur Schnur läuft, die eine Haltekraft aufbringt, ergibt sich ein Kräftegleichgewicht, das die Pose stabilisiert und dem Abtreiben entgegenwirkt. In Abwesenheit der Vorrichtung würde die Posenmontage nicht nur in Richtung der Strömung, sondern auch entlang eines Bewegungsradius, definiert durch eine Länge der Schnur und deren Aufnahmepunkt an Land, in Richtung Ufer abgetrieben.

Die Vorrichtung ist also bevorzugt ein Fischereizubehör oder ein Fischereiartikel.

Vorzugsweise ist jeder Aufnahmepunkt dabei als Durchgangsöffnung im ersten Schenkel entlang einer ersten Höhe des ersten Schenkels ausgebildet.

Durch diese Durchgangsöffnung lässt sich die Schnur der Posenmontage einfach in die Vorrichtung einfädeln. Dann kann die Vorrichtung mittels eines Knotens oder eines Stoppers, bevorzugt je ein Knoten oder Stopper oberhalb und unterhalb der Vorrichtung, in einer definierten Position an der Schnur gehalten oder befestigt werden, sodass die Vorrichtung stets in gleichem Abstand zur Pose und zum Gewicht gelagert ist, um die Vorrichtung stets in einer bestimmten Tiefe eines Gewässers zu halten und damit den Strömungsverhältnissen in unterschiedlichen Tiefen des Gewässers Rechnung zu tragen.

Vorzugsweise sind dabei 2 bis 6 Durchgangsöffnungen, bevorzugt äquidistant in einem Abstand von 2 mm bis 30 mm parallel entlang einer ersten Länge des ersten Schenkels angeordnet, wobei die Durchgangsöffnungen bevorzugt in einer ersten Hälfte der ersten Länge ausgeformt sind, wobei die erste Hälfte an den Winkel angrenzt.

Durch diese Anordnung der Durchgangsöffnungen lässt sich die Stärke der senkrecht auf die Vorrichtung wirkenden Kraft ändern, in dem der Aufnahmepunkt für die Schnur gewechselt wird.

Vorzugsweise ist der Aufnahmepunkt als Klemmvorrichtung im oder am ersten Schenkel, zum Aufnehmen der längs der ersten Höhe verlaufenden Schnur der Posenmontage, ausgebildet.

Durch diese Ausführung des Aufnahmepunkts kann die Vorrichtung mit der Posenmontage verbunden werden, ohne dass die Schnur in oder aus der Durchgangsöffnungen ein- bzw. ausgefädelt werden muss.

Vorzugsweise ist die Klemmvorrichtung so ausgebildet, dass sie die Schnur der Posenmontage an unterschiedlichen Positionen entlang der ersten Länge aufnehmen kann.

Durch diese Anordnung der Klemmvorrichtung lässt sich die Stärke der senkrecht auf die Vorrichtung wirkenden Kraft ändern, in dem der Aufnahmepunkt für die Schnur gewechselt wird.

Vorzugsweise liegt der Winkel zwischen dem ersten Schenkel und dem zweiten Schenkel zwischen mehr als 90° und weniger als 180°, insbesondere bevorzugt in einem Bereich von 105° bis 165°, am meisten bevorzugt in einem Bereich von 120° bis 150°.

Durch diese Ausführung orientiert und stabilisiert sich die Vorrichtung selbständig in der Strömung um den Aufnahmepunkt der Schnur und bewirkt eine Kraft senkrecht zur Richtung der Strömung.

Vorzugsweise ist die erste Länge grösser als eine zweite Länge des zweiten Schenkels, insbesondere bevorzugt zwischen 1.5- und 6-mal grösser, am meisten bevorzugt zwischen 2- und 5-mal grösser.

Durch diese Ausführung wird das Verhältnis der senkrecht auf die Vorrichtung wirkenden Kraft und der Abtriebskraft zu Gunsten der gewünschten senkrechten Kraft geändert.

Vorzugsweise liegt die erste Länge im Bereich von 1 cm bis 50 cm, insbesondere bevorzugt im Bereich von 1 cm bis 20 cm, ganz besonders bevorzugt im Bereich von 1 cm bis 10 cm, am meisten bevorzugt im Bereich von 10 cm bis 20 cm.

Vorzugsweise liegt die zweite Länge im Bereich von 1 cm bis 25 cm, insbesondere bevorzugt im Bereich von 1 cm bis 12 cm, ganz besonders bevorzugt im Bereich von 1 cm bis 4 cm, am meisten bevorzugt im Bereich von 3 cm bis 12 cm.

Vorzugsweise liegt die erste Höhe des ersten Schenkels und eine zweite Höhe des zweiten Schenkels im Bereich von 1 cm bis 30 cm, insbesondere bevorzugt im Bereich von 1 cm bis 15 cm, ganz besonders bevorzugt im Bereich von 1 cm bis 5 cm, am meisten bevorzugt im Bereich von 2 cm bis 15 cm.

Vorzugsweise liegt eine erste Dicke des ersten Schenkels und eine zweite Dicke des zweiten Schenkels im Bereich von 1 mm bis 20 mm, insbesondere bevorzugt im Bereich von 1 mm bis 10 mm, ganz besonders bevorzugt im Bereich von 1 mm bis 6 mm, am meisten bevorzugt im Bereich von 4 mm bis 10 mm.

Vorzugsweise liegt eine Gesamtlänge der Vorrichtung entlang einer durch die erste Länge vorgegebenen Richtung im Bereich von 2 cm bis 75 cm, insbesondere bevorzugt im Bereich von 2 cm bis 32 cm, ganz besonders bevorzugt im Bereich von 2 cm bis 14 cm, am meisten bevorzugt im Bereich von 13 cm bis 32 cm.

Vorzugsweise liegt eine maximale Höhe der Vorrichtung im Bereich von 1 cm bis 30 cm, insbesondere bevorzugt im Bereich von 1 cm bis 15 cm, ganz besonders bevorzugt im Bereich von 1 cm bis 5 cm, am meisten bevorzugt im Bereich von 2 cm bis 15 cm.

Vorzugsweise liegt eine Tiefe der Vorrichtung senkrecht zu einer durch die erste Länge vorgegebenen Richtung im Bereich von 1 cm bis 27 cm, insbesondere bevorzugt im Bereich von 1 cm bis 13 cm, ganz besonders bevorzugt im Bereich von 1 cm bis 5 cm, am meisten bevorzugt im Bereich von 3 cm bis 13 cm.

Für diese Grössenverhältnisse funktioniert die Vorrichtung für übliche Geschwindigkeiten der Strömung in den meisten Gewässern und in Verbindung mit einer grossen Grössenauswahl der Köder.

Vorzugsweise richtet sich die Vorrichtung in der Strömung in einen Gleichgewichtszustand aus, wobei die Strömung auf eine Seite des ersten Schenkels und eine Seite des zweiten Schenkels eine Kraft wirkt. Durch eine Wahl des Aufnahmepunkts lässt sich also der Hebel der Kraft, die über den ersten Schenkel und den zweiten Schenkel um den Aufnahmepunkt wirken, ändern und somit der Winkel und die Ausrichtung der Vorrichtung beeinflussen.

Durch diese Ausführung wirkt die stabilisierende senkrecht wirkende Kraft kontinuierlich auf die Vorrichtung und kann über die Wahl des Aufnahmepunkts angepasst werden.

Vorzugsweise ist eine Dichte der Vorrichtung höher als Wasser. Hierbei kann die Vorrichtung auch unterschiedliche Materialien mit unterschiedlichen Dichten aufweisen. Hierbei wird die Dichte der Vorrichtung durch Teilen einer Gesamtmasse der Vorrichtung durch ein Gesamtvolumen der Vorrichtung ermittelt. Auch Lufteinschlüsse in Form von Hohlräumen tragen also zur Dichte der Vorrichtung bei.

Durch diese Ausführung treibt die Vorrichtung nicht auf.

In einer alternativen Ausführungsform ist die Dichte der Vorrichtung niedriger als Wasser. Für die Ermittlung und die Materialbeiträge zur Dichte gilt das oben Gesagte. Bevorzugt ist in dieser Ausführungsform die Vorrichtung mit einem Gewicht gegen Auftreiben gesichert. Das Gewicht kann bevorzugt an der Vorrichtung oder an der Posenmontage befestigt sein.

Durch diese Ausführung treibt die Vorrichtung nicht auf.

Eine Pose kann einen Schwimmer, ein Float, einen Zapfen oder einen beliebigen Schwimmkörper umfassen.

Gemäss einem weiteren Aspekt der Erfindung wird eine Verwendung der Vorrichtung nach einem der vorhergehenden Ausführungsbeispiele an einer Posenmontage vorgeschlagen. Durch das Anbringen der Vorrichtung an der Posenmontage wird diese beim Fischen in einem Gewässer mit einer Strömung vom Abtreiben gehindert.

Durch diese Verwendung kann die Posenmontage an einer bestimmten Position, bevorzugt an einem antizipierten Aufenthaltsort von Fischen, gehalten oder stabilisiert werden und die Chancen auf einen Fang erhöht werden.

Vorzugsweise wird die Vorrichtung dabei in einer Tiefe des Gewässers mit laminarer Strömung ausserhalb von Strömungsturbulenzen an einer Gewässeroberfläche oder an einem Grund des Gewässers verwendet.

Dadurch wirkt die senkrechte Kraft kontinuierlich auf die Vorrichtung und erfährt keine Fluktuationen durch Turbulenzen.

Vorzugsweise wird die Vorrichtung für ihre Verwendung dabei so im Gewässer ausgerichtet, dass die Strömung auf eine in der Strömung stehende Seite des ersten Schenkels und des zweiten Schenkels auftrifft, sodass die Strömung asymmetrisch um die Vorrichtung fliesst, insbesondere ein grösserer Anteil der Strömung über den ersten Schenkel der Vorrichtung abgelenkt wird, wodurch eine Kraft auf die Vorrichtung senkrecht zur Strömungsrichtung wirkt.

Durch diese Ausführung der Verwendung wird das Verhältnis der senkrecht auf die Vorrichtung wirkende Kraft und der Abtriebskraft zu Gunsten der gewünschten senkrechten Kraft optimiert.

Vorzugsweise wird die senkrechte Kraft durch eine 180° Drehung der Vorrichtung um eine Achse senkrecht zu der Schnur der Posenmontage umkehrt.

Dadurch lässt sich die Posenmontage bei unterschiedlichen Strömungsrichtungen, also beispielsweise auf unterschiedlichen Uferseiten eines Gewässers, mit der gleichen Vorrichtung stabilisieren.

### Kurze Beschreibung der Zeichnungen

Weitere Ausgestaltungen, Vorteile und Anwendungen ergeben sich aus den abhängigen Ansprüchen und aus der nun folgenden Beschreibung anhand der Figuren. Dabei zeigen:
Fig. 1: Schematische Ansicht einer Vorrichtung nach einem Ausführungsbeispiel der Erfindung, wobei Fig 1.1 eine Draufsicht entlang der Höhe der Vorrichtung, Fig 1.2 eine Draufsicht entlang der Gesamtlänge der Vorrichtung, und Fig 1.3 eine Draufsicht entlang der Tiefe der Vorrichtung darstellt.
Fig. 2: Schematische Darstellung einer Posenmontage gemäss einer Verwendung der Vorrichtung, nach einem Ausführungsbeispiel der Erfindung.
Fig. 3: Schematische Darstellung einer Verwendung der Vorrichtung in einem Gewässer, aus einer über dem Gewässer schwebenden Perspektive, nach einem Ausführungsbeispiel der Erfindung.
Fig. 4: Schematische Darstellung einer Verwendung der Vorrichtung in einem Gewässer, in Form eines Schnittbilds des Gewässers senkrecht zu dessen Strömung, nach einem Ausführungsbeispiel der Erfindung.

### Weg(e) zur Ausführung

Sofern nicht anders angegeben, bezeichnen gleiche Bezugszeichen in den verschiedenen Figuren gleiche oder funktionsgleiche Komponenten.

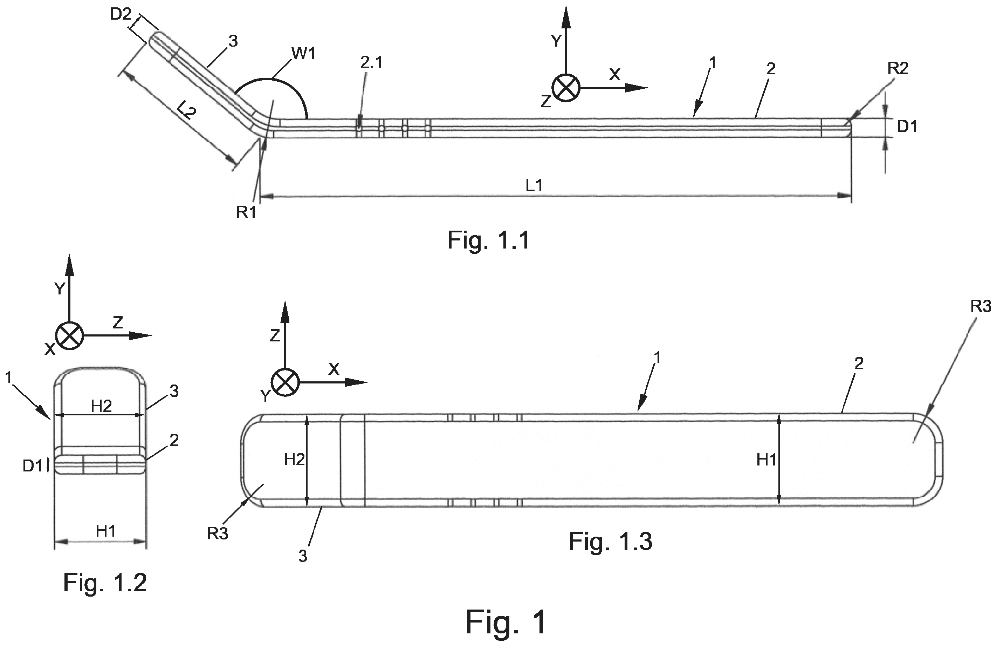

Fig. 1 zeigt eine schematische Darstellung einer Vorrichtung 1 nach einem Ausführungsbeispiel der Erfindung, wobei Fig. 1.1 eine Draufsicht auf die Vorrichtung 1 entlang einer Z-Achse der Vorrichtung 1 zeigt. Die Vorrichtung 1 entspricht einem Winkelprofil, umfassend einen ersten Schenkel 2 mit einer ersten Länge L1 und einer ersten Dicke D1, und einen zweiten Schenkel 3, mit einer zweiten Länge L2 und einer zweiten Dicke D2. Der erste Schenkel 2 und der zweite Schenkel 3 schliessen einen Winkel W1 ein und sind durch ein Verbindungselement mit einem Biegeradius R1 formschlüssig verbunden. Mindestens eine Kante eines Endes des ersten Schenkels, die entlang der Z-Achse verläuft, und mindestens eine Kante eines Endes des zweiten Schenkels, die entlang der Z-Achse verläuft, sind mit einem Radius R2 abgerundet. Die Vorrichtung 1 umfasst weiter eine Reihe von Aufnahmepunkten 2.1. Jeder davon ist in dem Ausführungsbeispiel der Erfindung als Durchgangsöffnung ausgestaltet. Alle Aufnahmepunkte 2.1 sind entlang der ersten Länge in einer ersten Hälfte des ersten Schenkels 2, die an den Winkel W1 angrenzt, angeordnet.

Fig 1.2 zeigt eine Draufsicht auf die Vorrichtung 1 entlang einer X-Achse der Vorrichtung, wobei der erste Schenkel 2 eine erste Höhe H1 und der zweite Schenkel 3 eine zweite Höhe H2 umfasst. Beide Schenkel 2,3 weisen insbesondere die gleiche Höhe H1 = H2 auf.

Fig 1.3 zeigt eine Draufsicht auf die Vorrichtung 1 entlang einer Y-Achse der Vorrichtung, wobei an einem Enden des ersten Schenkels 2 und an einem Enden des zweiten Schenkels mindestens ein Übergang von der ersten Länge L1 zu der ersten Höhe H1 und ein Übergang von der zweiten Länge L2 zu der zweiten Höhe H2 mit einem Radius R3 abgerundet sind.

In einer vorteilhaften Ausführungsform ist vorgesehen, dass die Länge L1 im Bereich von 1 cm bis 50 cm, insbesondere im Bereich von 1 cm bis 20 cm, vorzugsweise im Bereich von 1 cm bis 10 cm, besonders bevorzugt im Bereich von 10 cm bis 20 cm, liegt und die Länge L2 im Bereich von 1 cm bis 25 cm, insbesondere im Bereich von 1 cm bis 12 cm, vorzugsweise im Bereich von 1 cm bis 4 cm, besonders bevorzugt im Bereich von 3 cm bis 12 cm, liegt. Die Höhe H1 und die Höhe H2 liegen im Bereich von 1 cm bis 30 cm, insbesondere im Bereich von 1 cm bis 15 cm, vorzugsweise im Bereich von 1 cm bis 5 cm, besonders bevorzugt im Bereich von 2 cm bis 15 cm. Die Dicke D1 und die Dicke D2 liegen im Bereich von 1 mm bis 20 mm, insbesondere im Bereich von 1 mm bis 15 mm, vorzugsweise im Bereich von 1 mm bis 5 mm, besonders bevorzugt im Bereich von 4 mm bis 10 mm. Vorzugsweise liegt eine Gesamtlänge der Vorrichtung 1 entlang einer durch den ersten Schenkel vorgegebenen Richtung im Bereich von 2 cm bis 75 cm, insbesondere im Bereich von 2 cm bis 32 cm, vorzugsweise im Bereich von 2 cm bis 14 cm, besonders bevorzugt im Bereich von 13 cm bis 32 cm. Vorzugsweise liegt eine maximale Höhe des Winkelprofils im Bereich von 1 cm bis 30 cm, insbesondere im Bereich von 1cm bis 15 cm, vorzugsweise im Bereich von 1 cm bis 5 cm, besonders bevorzugt im Bereich von 2 cm bis 15 cm. Vorzugsweise liegt eine Tiefe des Winkelprofils quer zur durch den ersten Schenkel vorgegebenen Längsrichtung im Bereich von 1 cm bis 27 cm, insbesondere im Bereich von 1 cm bis 13 cm, vorzugsweise im Bereich von 1 cm bis 5 cm, besonders bevorzugt im Bereich von 3 cm bis 13 cm.

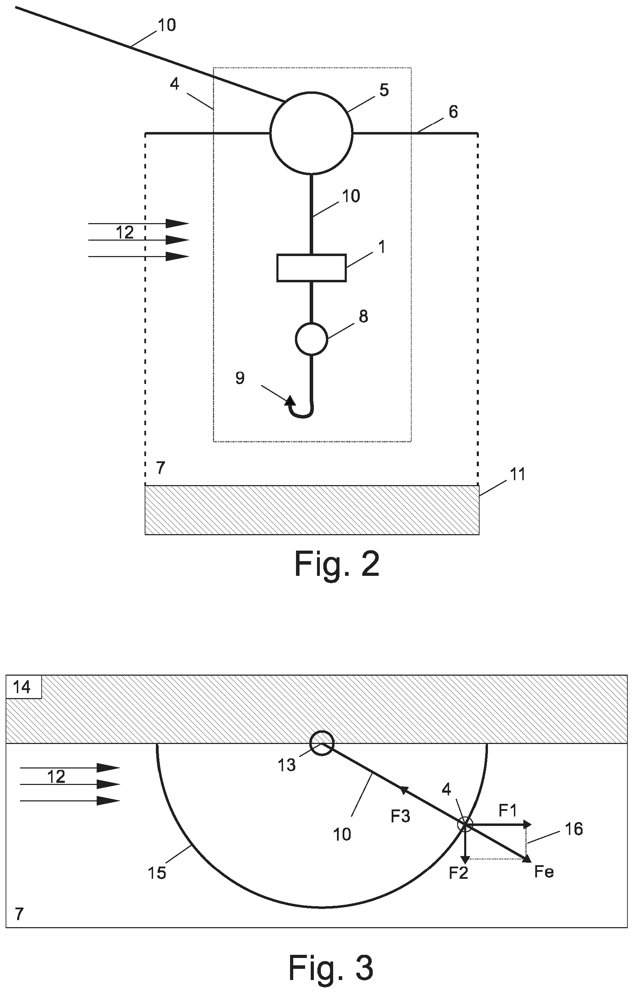

Fig. 2 stellt schematisch eine Posenmontage 4 zum Fischen gemäss einer Verwendung einer Vorrichtung 1 nach einem bevorzugten Ausführungsbeispiel der Erfindung nach Fig. 1 dar, wobei die Posenmontage 4 eine Pose 5, die an oder unter einer Wasseroberfläche 6 eines Gewässers 7 treibt, die erfindungsgemässe Vorrichtung 1, ein Gewicht 8, einen Haken 9 und eine Schnur 10 umfasst. Die Schnur 10 verbindet die Elemente der Posenmontage 4, indem sie an den Elementen befestigt wird, wobei die Befestigung einen Klemmmechanismus oder das Durchfädeln der Schnur durch eine Öffnung der Elemente oder eine Arretierung mittels Knoten in der Schnur 10 umfassen kann.

In einer bevorzugten Ausführungsform verhindert die Pose 5 ein Absinken der Posenmontage 4, insbesondere des Hakens 9 zum Fischen, auf einen Grund 11 des Gewässers 7. Weiter verhindert das Gewicht 8 ein Auftreiben der Hakens 9 und eines daran befestigten Köders. Während die Vorrichtung 1 das Abtreiben der Posenmontage 4 in Strömungsrichtung 12 verhindert.

Fig. 3 stellt schematisch eine Verwendung der Vorrichtung 1 nach einem Ausführungsbeispiel der Erfindung dar, wobei in einem Gewässer 7 mit einer Strömung 12 eine Angel 13 an dessen Ufer 14 befestigt ist. Eine Schnur 10 verbindet die Angel 13 mit einer Posenmontage 4, wobei eine Länge der Schnur 10 einen Bewegungsradius 15 für die Posenmontage 4, definiert. Die Strömung 12 bewirkt dabei eine erste Kraft F1 in Richtung der Strömung 12 und eine zweite Kraft F2, gemäss der Verwendung der Vorrichtung 1 senkrecht zur Strömung 12, auf die Posenmontage 4, und insbesondere auf die an der Schnur 10 der Posenmontage 4 befestigte Vorrichtung. Die erste Kraft F1 und die zweite Kraft F2 addieren sich dabei zu einer effektiven Kraft Fe. In einem Fall, in dem sich die Posenmontage 4 auf ihrem Bewegungsradius 15 befindet und die effektive Kraft Fe parallel zur Schnur 10 die an der Angel 13 befestigt wird verläuft, wird die effektive Kraft Fe von einer dritten Kraft F3 in Form einer Zugkraft durch die Angel 13 vollständig aufgehoben. Die Posenmontage 4 befindet sich dann in einem Kräftegleichgewicht, gemäss einem Kräfteparallelogramm 16, welches ein Abtreiben der Posenmontage 4 verhindert.

In einer Ausführungsform ohne die Vorrichtung 1 wird die Posenmontage 4 hingegen mit der Strömung 12 und in Richtung des Ufers 14 abgetrieben. Wobei das Abtreiben in Richtung des Ufers 14 aus einer Länge der Schnur 10 resultiert, die eine Bewegungsfreiheit der Posenmontage 4 auf ihren Bewegungsradius 15 oder ein dadurch umschlossenes Gebiet begrenzt.

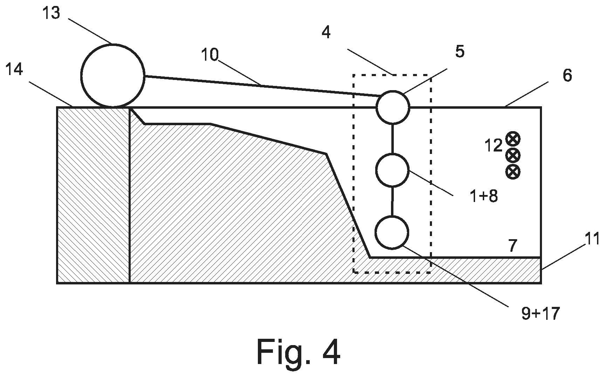

Fig. 4 stellt schematisch ein Schnittbild eines Gewässers 7, dessen Oberfläche, dessen Grund 11 und dessen Ufer 14 dar, wobei das Schnittbild senkrecht zu der Strömung 12 des Gewässers 7 ausgerichtet ist. Fische halten sich bevorzugt an einer bestimmten Position 17 des Gewässers 7 auf. Es ist das Ziel, den Haken 9 an dieser Position 17 zu platzieren und zu halten. Dafür wird die Vorrichtung 1, insbesondere eine Orientierung der Vorrichtung 1 und der Aufnahmepunkt 2.1 an dem die Vorrichtung 1 an der Schnur 10 befestigt wird, und die Position der Angel 13 so gewählt, dass sich an der Position 17 des Fisches ein Kräftegleichgewicht zwischen Fe und F3 einstellt und ein Abtreiben der Posenmontage 4 verhindert.

Während in der vorliegenden Anmeldung verschiedene Ausführungen der Technologie beschrieben sind, ist klar darauf hinzuweisen, dass diese nicht hierauf beschränkt ist und in auch anderer Weise innerhalb des Umfangs der folgenden Ansprüche ausgeführt werden kann.

## Patentansprüche

1. Vorrichtung (1) zum Verhindern des Abtreibens einer Posenmontage (4) beim Fischen in einem Gewässer (7) mit einer Strömung (12), mit
einem Winkelprofil mit einem ersten Schenkel (2), einem zweiten Schenkel (3), und einem Winkel (W1) zwischen dem ersten Schenkel (2) und dem zweiten Schenkel (3),
mindestens einem Aufnahmepunkt (2.1) für eine Schnur (10) der Posenmontage (4) am ersten Schenkel (2).

2. Vorrichtung (1) nach Anspruch 1, bei der jeder Aufnahmepunkt (2.1) als Durchgangsöffnung im ersten Schenkel (2) entlang einer ersten Höhe (H1) des ersten Schenkels (2) ausgebildet ist.

3. Vorrichtung (1) nach Anspruch 2, mit mehreren zueinander parallelen Durchgangsöffnungen entlang einer ersten Länge (L1) des ersten Schenkels (2) als Aufnahmepunkte (2.1) für die Schnur (10) der Posenmontage (4),
vorzugsweise mit 2 bis 6 Durchgangsöffnungen,
vorzugsweise mit einem Abstand von 2 mm bis 30 mm zwischen benachbarten Durchgangsöffnungen,
vorzugsweise mit dem gleichen Abstand zwischen allen benachbarten Durchgangsöffnungen,
vorzugsweise mit einer Anordnung der Durchgangsöffnungen in einer ersten Hälfte der ersten Länge (L1), wobei die erste Hälfte an den Winkel (W1) angrenzt.

4. Vorrichtung (1) nach Anspruch 1, bei der jeder Aufnahmepunkt (2.1) als Klemmvorrichtung im oder am ersten Schenkel (2) ausgebildet ist zum Aufnehmen der längs einer ersten Höhe (H1) des ersten Schenkels (2) verlaufenden Schnur (10) der Posenmontage (4).

5. Vorrichtung (1) nach Anspruch 4, bei der die Klemmvorrichtung ausgebildet ist zum Aufnehmen der Schnur (10) der Posenmontage (4) an unterschiedlichen Positionen entlang der ersten Länge (L1).

6. Vorrichtung (1) nach einem der vorangehenden Ansprüche, wobei der Winkel (W1) in einem Bereich von mehr als 90° bis weniger als 180°, insbesondere in einem Bereich von 105° bis 165°, vorzugsweise in einem Bereich von 120° bis 150°, liegt.

7. Vorrichtung (1) nach einem der vorangehenden Ansprüche, wobei die erste Länge (L1) grösser ist als eine zweite Länge (L2) des zweiten Schenkels (3), insbesondere zwischen 1.5- und 6-mal grösser, vorzugsweise zwischen 2- und 5-mal grösser.

8. Vorrichtung (1) nach einem der vorangehenden Ansprüche,
wobei die erste Länge (L1) im Bereich von 1 cm bis 50 cm, insbesondere 1 cm bis 20 cm, vorzugsweise 1 cm bis 10 cm, besonders bevorzugt 10 cm bis 20 cm, liegt und die zweite Länge (L2) im Bereich von 1 cm bis 25 cm, insbesondere 1 cm bis 12 cm, vorzugsweise 1 cm bis 4 cm, besonders bevorzugt 3 cm bis 12 cm, liegt,
vorzugsweise wobei die erste Höhe (H1) und eine zweite Höhe (H2) des zweiten Schenkels (3) im Bereich von 1 cm bis 30 cm, insbesondere 1 cm bis 15 cm, vorzugsweise 1 cm bis 5 cm, besonders bevorzugt 2 cm bis 15 cm, liegen
vorzugsweise wobei eine erste Dicke (D1) des ersten Schenkels (2) und eine zweite Dicke (D2) des zweiten Schenkels (3) im Bereich von 1 mm bis 20 mm, insbesondere 1 mm bis 10 mm, vorzugsweise 1 mm bis 6 mm, besonders bevorzugt 4 mm bis 10 mm, liegen,
vorzugsweise wobei eine Gesamtlänge der Vorrichtung (1) entlang der ersten Länge (L1) im Bereich von 2 cm bis 75 cm, insbesondere 2 cm bis 32 cm, vorzugsweise 2 cm bis 14 cm, besonders bevorzugt 13 cm bis 32 cm, liegt,
vorzugsweise wobei eine maximale Höhe der Vorrichtung (1) im Bereich von 1 cm bis 30 cm, insbesondere 1 cm bis 15 cm, vorzugsweise 1 cm bis 5 cm, besonders bevorzugt 2 cm bis 15 cm, liegt,
vorzugsweise wobei eine Tiefe der Vorrichtung (1) senkrecht zur ersten Länge (L1) im Bereich von 1 cm bis 27 cm, insbesondere 1 cm bis 13 cm, vorzugsweise 1 cm bis 5 cm, besonders bevorzugt 3 cm bis 13 cm, liegt.

9. Vorrichtung (1) nach einem der vorangehenden Ansprüche, ausgebildet zu, bei Betrieb im Gewässer (7) mit der Strömung (12), ihrem Ausrichten in einen Gleichgewichtszustand um den Aufnahmepunkt (2.1), bei Auftreffen der Strömung (12) auf eine in der Strömung (12) stehende Seite des ersten Schenkels (2) und des zweiten Schenkels (3).

10. Vorrichtung (1) nach einem der vorangehenden Ansprüche, wobei die Vorrichtung (1) eine Dichte höher als Wasser aufweist.

11. Vorrichtung (1) nach einem der vorangehenden Ansprüche 1-9, wobei die Vorrichtung (1) eine Dichte niedriger als Wasser aufweist, mit einem Gewicht dimensioniert zum Sichern gegen Auftrieb.

12. Verwendung einer Vorrichtung (1) nach einem der vorhergehenden Ansprüche an der Posenmontage (4), zum Verhindern des Abtreibens der Posenmontage (4) beim Fischen in dem Gewässer (7) mit der Strömung (12).

13. Verwendung nach Anspruch 12, an der Schnur (10) der Posenmontage (4) zwischen einem Gewicht (8) und der Pose (5), bevorzugt in einer Tiefe des Gewässers (7) mit einer laminaren Strömung ausserhalb von Strömungsturbulenzen an einer Oberfläche (6) des Gewässers (7) oder an einem Grund (11) des Gewässers (7).

14. Verwendung nach einem der Ansprüche 12 oder 13 , wobei die Geometrie der Vorrichtung (1) so ausgestaltet ist, dass bei einem Platzieren der Vorrichtung (1) im Gewässer (7), in der die Strömung (12) auf eine in der Strömung (12) stehende Seite des ersten Schenkels (2) und des zweiten Schenkels (3) auftrifft, die Strömung (12) asymmetrisch um die Vorrichtung (1) fliesst, insbesondere ein grösserer Anteil der Strömung (12) über den ersten Schenkel (2) abgelenkt wird, wodurch eine Kraft (F2) auf die Vorrichtung (1) senkrecht zur Strömungsrichtung wirkt.

15. Verwendung nach Anspruch 14, wobei eine 180° Drehung der Vorrichtung (1) um eine Achse senkrecht zu der Schnur (10) der Posenmontage (4) die Kraft (F2), die senkrecht auf die Vorrichtung (1) wirkt, umkehrt.
